# EUROPÄISCHE PATENTSCHRIFT

(11) **EP 3 012 570 B1**
(45) Veröffentlichungstag und Bekanntmachung des Hinweises auf die Patenterteilung: **21.07.2021**
(21) Anmeldenummer: 15193063.3
(22) Anmeldetag: 11.04.2008
(51) Int. Cl.: F28F 9/02, F28D 7/16

(54) **WÄRMETAUSCHER**
HEAT EXCHANGER
ÉCHANGEUR THERMIQUE

(30) Priorität: 11.04.2007 DE 102007017330; 22.06.2007 DE 102007029300; 14.03.2008 DE 102008014163
(43) Veröffentlichungstag der Anmeldung: 27.04.2016
(62) Teilanmeldung aus: 08748897.9
(73) Patentinhaber: MAHLE Behr GmbH & Co. KG, 70469 Stuttgart (DE)
(72) Erfinder: Braic, Viorel, 70190 Stuttgart (DE); Hemminger, Roland, 73733 Esslingen (DE); Hendrix, Daniel, 70736 Fellbach (DE); Schienemann, Mark, 71686 Remseck (DE); Skiba, Erwin, 70563 Stuttgart (DE); Budimir, Danijel, 70376 Stuttgart (DE); Käser, Jochen, 70180 Stuttgart (DE)
(74) Vertreter: Grauel, Andreas

(56) Entgegenhaltungen:
- EP-A1- 0 309 683
- WO-A-2007/048603
- WO-A-2007/082774
- WO-A-2008/003486
- DE-A1- 2 852 408
- DE-A1- 3 841 470
- DE-A1-102005 002 417
- DE-A1-102005 012 761
- FR-A- 2 092 687
- JP-A- 8 291 995
- JP-A- 11 159 993
- JP-A- 62 033 031
- US-A1- 2004 226 694

## Beschreibung

Die Erfindung betrifft einen Ladeluft-Wärmetauscher oder Abgas-Wärmetauscher zum Wärmetauschen zwischen einem ersten Fluid, welches Ladeluft oder Abgas ist, und einem zweiten Fluid, welches ein Kühlmittel ist, aufweisend: einen Block zur voneinander getrennten und wärmetauschenden Führung des ersten und zweiten Fluids, welcher Block eine Anzahl von dem ersten Fluid durchströmbare Strömungskanäle und ein die Strömungskanäle aufnehmendes, von dem zweiten Fluid durchströmbares Gehäuse aufweist; mindestens einen Kastendeckel, welcher mit den Strömungskanälen strömungsverbunden ist; einen Boden, der am Kastendeckel festgelegt ist und mit einer oder mehreren Durchgangsöffnungen für die Strömungskanäle versehen ist.

Bei einem bekannten Wärmetauscher kann ein Kastendeckel aus tiefgezogenem Blech ausgeführt werden, der beim Herstellungsprozess mit dem Block verlötet wird. Dies hat zwar Vorteile im Hochtemperaturbereich, jedoch müssen Anbauelemente wie z.B. Halter oder Flansche für Sensoren als Zusatzteile aus Blech hergestellt werden und mit dem Kastendeckel vor dem Löten verbunden werden, was den Herstellungsprozess komplizierter macht. Darüber hinaus kann eine aufwendigere Kastenform in der Regel nicht mehr als Tiefziehteil hergestellt werden, so dass in diesem Fall eine Gussfertigung erfolgen muss und der Kastendeckel in der Regel an den Block angeschweißt werden muss. Diese Art eines Kastens erweist sich gerade bei aufwendigeren Bauformen als vergleichsweise teuer und aufwendig in der Herstellung.

Eine kostengünstige Alternative zu solchen Wärmetauschern ist ein Wärmetauscher der eingangs genannten Art, bei dem der Kasten einen Kastendeckel aus Kunststoff aufweist. Hier können vergleichsweise komplexe Bauformen realisiert werden, wobei mit entsprechenden Kunststoffmaterialien und einer entsprechenden Auslegung des Kastens durchaus auch höhere Temperaturbereiche realisiert werden können. Beispiele von Kastendeckeln aus Kunststoff sind in DE 10 2004 051 207 A1 und DE 10 2004 047 901 A1 angegeben.

Grundsätzlich gibt es unterschiedliche Arten, einen Kunststoffkastendeckel am Wärmetauscher anzubringen, so beispielsweise Anbindungen wie sie in WO 2004/09457, Fig. 2 oder DE 199 53 785 A1, Fig. 4 gezeigt sind.

DE 10 2005 012 761 A1 offenbart einen eingangs genannten Wärmetauscher mit einem Gehäuse aus zwei Seitenteilen und zwei Gehäusedeckeln, wobei die Seitenteile am Block verlötet sind und die Gehäusedeckel mit den Seitenteilen verschweißt sind. Des Weiteren werden Sammelkästen aus Kunststoff unter Zwischenfügung einer Dichtung mit Rohrböden mechanisch verbunden. Die mechanische Verbindung wird durch das Umbiegen von Laschen der Rohrböden auf den Rand des Sammelkastens erledigt. Diese Art eines Wärmetauschers ist noch verbesserungswürdig.

Auch ist ein Wärmetauscher durch die DE 28 52 408 A1 bekannt geworden. Ebenso sind Verbindungsmethoden durch die EP 0 309 683 A1, DE 38 41 470 A1 und die DE 10 2005 002 417 A1 bekannt geworden.

Wünschenswert ist eine vorteilhaft verbesserte Anbindung eines Kastendeckels, insbesondere eines Kastendeckels aus einem Nichtmetallmaterial an einem Metallteil, am Wärmetauscher, vorzugsweise unter Berücksichtigung einer verbesserten Dichtwirkung. Wünschenswert ist auch eine Verbesserung des Gehäuses.

An dieser Stelle setzt die Erfindung an, deren Aufgabe es ist, einen Wärmetauscher anzugeben, bei dem der Kastendeckel eines Kastens besonders vorteilhaft am Boden angebunden ist, bei dem insbesondere der Kastendeckel aus einem Nichtmetallmaterial am Metallboden angebunden ist, vorzugsweise unter Verbesserung einer Dichtwirkung. Insbesondere ist es eine weitere Aufgabe der Erfindung einen Wärmetauscher mit einem verbesserten Gehäuse anzugeben.

Die Aufgabe wird gelöst durch einen Wärmetauscher gemäß Anspruch 1. Als besonders vorteilhaft hat sich dieses erfindungsgemäße Konzept für den Fall erwiesen, dass der Kastendeckel und der Boden aus unterschiedlichen Materialien bestehen.

Ein Wärmetauscher der eingangs genannten Art ist erfindungsgemäß als ein Ladeluft-Wärmetauscher, bei dem das erste Fluid eine Ladeluft ist, oder als ein Abgas-Wärmetauscher, bei dem das erste Fluid ein Abgas ist, gebildet sein. Das erste Fluid kann auch ein Abgas-Ladeluft-Gemisch oder dergleichen Fluid zum Aufladen einer Verbrennungs-Kraftmaschine sein. Das zweite Fluid ist ein Kühlmittel, beispielsweise ein wasserbasiertes oder anderes zweckmäßiges Kühlmittel.

Die Erfindung geht von der Überlegung aus, dass eine Anbindung eines Kastendeckels, insbesondere aus Nichtmetall, beispielsweise einem Kunststoff, Faserverbundstoff oder einer Keramik, vergleichsweise sicher sein sollte und zum anderen ausreichend flexibel hinsichtlich thermischer Relativbewegungen des Bodens, der vorzugsweise aus Metall, z.B. Aluminium besteht, und einem Kastendeckel ist. Die Erfindung hat erkannt, dass sich zu diesem Zweck eine Wellschlitzbördelung

in überlegener Weise gegenüber bekannten Anbindungsarten eignet. Eine Anbindungsart gemäß dem Konzept der Erfindung ermöglicht somit eine besonders kosteneffektive Anbindung eines Kastendeckels, z. B. aus Metall, insbesondere aber aus Nichtmetall, an eine ansonsten metallische Bauweise eines Wärmetauschers, so dass insbesondere auch komplexere Kastenformen unter Vermeidung aufwendigerer Herstellungsverfahren ermöglicht sind.

Als eine erfindungsgemäße Ausgestaltung der Erfindung hat sich ein Wärmetauscher in Form eines Ladeluftwärmetauschers, insbesondere eines Ladeluftkühlers erwiesen, der die Merkmale gemäß dem Konzept der Erfindung aufweist. Die oben aufgeführten Probleme haben sich nämlich insbesondere bei Luftkästen ergeben, wobei aufgrund von Bauraumengpässen in der Fahrzeugfront sich in diesem Bereich die indirekte Ladeluftkühlung zunehmend durchsetzt. In diesem Zusammenhang führt eine Ausgestaltung in erfindungsgemäßer Weise auf die Verwendung des Wärmetauschers gemäß dem Konzept der Erfindung als Ladeluftkühler zur indirekten Kühlung von Ladeluft in einem Ladeluftsystem für eine Brennkraftmaschine eines Kraftfahrzeugs.

Darüber hinaus lässt sich das erfinderische Konzept auch bei einem Wärmetauscher realisieren, wie er in der DE 10 2006 043 526 beschrieben ist. Dort ist ein Wärmetauscher der eingangs genannten Art angegeben, bei dem der Boden wenigstens eine erste Nut aufweist, in welche sich der Kastendeckel bzw. ein Wandabschnitt des Kastendeckels des Kastens erstreckt. Unter einem Kasten ist vorliegend insbesondere der Kastendeckel, eine Dichtung und gegebenenfalls der Boden zu verstehen. Es hat sich gezeigt, dass sich das Verbindungskonzept einer Schraubverbindung und/oder einer Schlitzbördelung zwischen Kastendeckel und Boden in besonders vorteilhafter Weise bei dem in der genannten Anmeldung beschriebenen Wärmetauscher realisieren lässt.

Weitere Vorteile des Konzepts der Erfindung ergeben sich im Rahmen vorteilhafter Weiterbildungen der Erfindung, die den Unteransprüchen zu entnehmen sind.

Vorteilhaft besteht der Boden aus einem Metall, insbesondere aus Aluminium. Dabei ist eine ausreichende Thermostabilität als auch eine vorteilhafte Anbringung der Strömungskanäle in den Durchgangsöffnungen des Bodens ermöglicht.

Um eine weiter verbesserte dichte Anbindung des Kastendeckels zu gewährleisten, sieht die erfindungsgemäße Ausgestaltung vor, dass zwischen dem Boden und dem Kastendeckel eine Dichtung festgelegt ist.

Gemäß der Erfindung ist vorgesehen, dass der Boden eine Sicke aufweist, die zur Aufnahme der Dichtung ausgelegt ist. Insbesondere ist die Sicke in einem Bodenrandbereich und/oder einem Kastendeckelrandbereich angeordnet.

Im Rahmen der erfindungsgemäßen Ausgestaltung ist es besonders effektiv bei einer Abdichtung des Kastens, dass sich eine Stirnseite des Kastendeckels entlang der Sicke erstreckt.

Die zuvor genannten Weiterbildungen eignen sich, vorzugsweise zur Verbesserung eines Dichtverhaltens, in besonderer Weise dazu, den Boden und den Kastendeckel relativ zueinander - in einer Sicke - festzulegen. Wahlweise können eine oder mehrere Sicken am Kastendeckel angeordnet sein. Vorteilhaft erstreckt sich dann eine Stirnseite des Bodens entlang der Sicke. Vorzugsweise sind eine oder mehrere Sicken am Boden angeordnet und vorteilhaft erstreckt sich eine Stirnseite des Kastendeckels entlang der Sicke. Mit anderen Worten, es werden in besonders vorteilhafter Abgrenzung zum Stand der Technik eine oder mehrere Sicken genutzt, um eine verbesserte und dichtere Festlegung von Boden und Kastendeckel relativ zueinander zu erreichen.

Gemäß einer erfindungsgemäßen Gestaltung ist vorgesehen, dass der Kastendeckel mit einer Stirnseite stumpf auf den Boden stößt, wobei die Stirnseite die Sicke übergreift. Mit anderen Worten, die Breite der Stirnseite ist größer als die Breite der Sicke.

In einer besonders bevorzugten Weiterbildung der Erfindung hat sich die Möglichkeit einer Materialeinsparung dadurch ergeben, dass vorteilhaft eine Bodendicke radial nach außen über eine Sicke hinweg verringert ist. Vorzugsweise ist die Bodendicke wenigstens am Sickengrund geringer als an einer entlang des Radius weiter innenliegenden Stelle des Bodens. Entsprechend sind die Verschleißkräfte für die Wellschlitzbördelung aufgrund der verringerten Materialstärke geringer als bei anderen Bauformen. Ein besonders vorteilhafter Kompromiss zwischen Materialaufwand und Stabilität ergibt sich, wenn das Verhältnis einer größten Bodendicke zu einer geringsten Bodendicke im Bereich zwischen 1,5:1 und 4:1, insbesondere zwischen 2:1 und 4:1 liegt.

Vorzugsweise ist der Boden am Gehäuse festgelegt, beispielsweise durch eine stoffschlüssige oder mechanische oder andere für die Festlegung des Bodens geeignete Verbindung des Bodens mit dem Gehäuse. Insbesondere nimmt der Boden die Strömungskanäle in der einen oder den mehreren Durchgangsöffnungen auf. Dadurch ist eine ausreichende Halterung der Strömungskanäle am Boden gewährleistet und der Block in besonders vorteilhafter Weise im Gehäuse angeordnet.

Vorzugsweise weist das Gehäuse sich entlang einer Strömungsrichtung erstreckende Seitenwände auf und ist mehrteilig gebildet. Dies ermöglicht eine besonders einfache Assemblierung des Blocks im Gehäuse und des Wärmetauschers insgesamt. Es hat sich gezeigt, dass es gemäß der Weiterbildung besonders vorteilhaft ist, dass wenigstens ein Gehäuseteil eine Gehäusekante ausbildet, d.h. einstückig ausbildet. Dadurch lassen sich Undichtigkeiten durch Verbindungsstellen von Gehäuseteilen an einer Gehäusekante vermeiden und die Assemblierung des Gehäuses ist erheblich erleichtert. Vorzugsweise bildet wenigstens ein Gehäuseteil wenigstens bereichsweise eine erste und eine zweite, winklig zueinander ausgerichtete Seitenwand einstückig aus. Dies hat den Vorteil, dass im Unterschied zum Stand der Technik Gehäuseseitenwände nicht mehr separat zur Verfügung gestellt werden müssen, sondern in einem einzigen Gehäuseteil einstückig bereitgestellt werden. Insbesondere verringert dies die Anzahl der Gehäuseteile.

Vorzugsweise ist gemäß einer ersten Abwandlung wenigstens ein Gehäuseteil U-förmig ausgebildet, beispielsweise zur Bereitstellung einer Deckwand sowie wenigstens eines Teils einer ersten Seitenwand und wenigstens eines Teils einer zweiten Seitenwand des Gehäuses. Vorzugsweise ist das Gehäuse aus zwei U-förmigen Gehäuseteilen gebildet. Besonders bevorzugt sind die zwei Gehäuseteile gegenstückig gebildet, so dass mit ihnen ein gesamter Gehäusemantel auf einfache Weise gebildet werden kann. Insbesondere kann es vorteilhaft sein, die beiden U-förmigen Gehäuseteile symmetrisch bzw. praktisch identisch zu bilden, was den Herstellungsprozess erheblich vereinfacht. Vorzugsweise zur Bildung eines Gehäusemantels, und insbesondere im Falle von U-förmig ausgebildeten Gehäuseteilen, ist eine Trennkante von Gehäuseteilen im Bereich einer Seitenwand angeordnet.

In einer zweiten Abwandlung hat es sich als vorteilhaft erwiesen, dass wenigstens ein Gehäuseteil L-förmig gebildet ist, beispielsweise als eine mit dem einstückigen Gehäuseteil gebildete Deckwand und Seitenwand des Gehäuses. Insgesamt kann das Gehäuse aus zwei L-förmigen Gehäuseteilen gebildet sein. Insbesondere sind die beiden L-förmigen Gehäuseteile gegenstückig gebildet bzw. weitgehend symmetrisch oder identisch, was den Herstellungsaufwand erheblich reduziert. Vorzugsweise im Rahmen der zweiten Abwandlung hat es sich als vorteilhaft erwiesen, eine Trennkante von Gehäuseteilen im Bereich einer Gehäusekante anzuordnen.

Im Rahmen einer bevorzugten Weiterbildung der Erfindung weist der Block eine erste Anordnung und eine zweite Anordnung von Strömungskanälen auf, wobei die erste Anordnung und die zweite Anordnung auf gegenüberliegenden Seiten eines Zwischenbodens angeordnet sind. Dadurch ist die Integrität und Stabilität des Wärmetauschers erheblich verbessert und dennoch lässt sich ein vergleichsweise großer Strömungsquerschnitt für das erste Fluid, beispielsweise ein Abgas oder eine Ladeluft, zur Verfügung stellen.

Ein Zwischenboden kann parallel zu und/oder im Wesentlichen in einer durch die Trennkanten von Gehäuseteilen aufgespannten Ebene angeordnet sein. Dies hat sich insbesondere bei U-förmig gebildeten Gehäuseteilen als vorteilhaft erwiesen, bei denen eine Trennkante im Bereich einer Seitenwand angeordnet ist. Dies ermöglicht vorteilhaft die Anordnung eines Zwischenbodens praktisch mittig und parallel zu den Seitenwänden und in der von den Trennkanten der U-förmigen Gehäuseteile aufgespannten Ebene.

Grundsätzlich ist es im Rahmen der vorgenannten Weiterbildung vorteilhaft, dass gegenüberliegende Trennkanten der Gehäuseteile einen Spalt, insbesondere mit einer Spaltbreite von 1mm bis 2mm, bilden. Insbesondere beim Verlöten der Bauteile miteinander, insbesondere zur Ausbildung des Lötminiskus ist die Wahl der Spaltbreite wichtig, da weder bei einem zu großen noch bei einem zu kleinen Spalt eine ausreichende Verlötung gewährleistet ist.

Gemäß einer bevorzugten ersten Abwandlung dieser Weiterbildung kann ein Zwischenboden in einen durch gegenüberliegende Trennkanten der Gehäuseteile gebildeten Spalt eingreifen. Dies stabilisiert das mehrteilige Gehäuse in Verbindung mit dem Block. Zudem kann in besonders bevorzugter Weise der im Spalt liegende Zwischenboden zur Abdichtung der Gehäuseteile gegeneinander genutzt werden. In einer bevorzugten zweiten Abwandlung dieser Weiterbildung kann ein Steg Trennkanten der Gehäuseteile abdecken, insbesondere außenseitig am Gehäuse angeordnet sein. Die zusätzlich oder alternativ zur ersten Abwandlung vorgesehene Maßnahme kann ebenfalls zur Stabilisierung des mehrteiligen Gehäuses genutzt werden. Vorzugsweise kann ein Steg eine Sicke aufweisen, insbesondere eine Sicke, die zusätzlich zur Versteifung ausgelegt ist. Besonders bevorzugt ist in Weiterbildung dieser zweiten Abwandlung eine Sicke des Stegs derart ausgebildet, dass sie in einen durch gegenüberliegende Trennkanten der Gehäuseteile gebildeten Spalt eingreift.

In einer vorteilhaften Weiterbildung der Erfindung sind zumindest zwei Bauteile des Wärmetauschers miteinander verlötet.

In einer vorteilhaften Weiterbildung der Erfindung sind alle Bauteile bis auf den zumindest einen Kastendeckel, insbesondere die zwei Kastendeckel, des Wärmetauschers miteinander verlötet.

Insgesamt wird gemäß der vorgenannten Weiterbildungen betreffend das Gehäuse ein besonders stabiles und mit vergleichsweise wenigen Teilen assemblierbares Gehäuse zur Verfügung gestellt. Die zuvor erläuterten Maßnahmen zur Ausführung bzw. Anordnung der Trennkanten der Gehäuseteile führen darüber hinaus zu einer besonders bevorzugten weiteren Stabilisierung bzw. Verstärkung des mehrteiligen Gehäuses.

Während sich die Erfindung als besonders nützlich im Rahmen einer Verwendung des Wärmetauschers in Form eines Ladeluftwärmetauschers, insbesondere Ladeluftkühlers, erwiesen hat, beispielsweise zur indirekten oder zur direkten Kühlung von Ladeluft in einem Ladeluftzuführsystem für eine Brennkraftmaschine eines Kraftfahrzeugs, und in diesem Sinne zu verstehen ist und während die Erfindung im Folgenden im Detail anhand von Beispielen aus diesem Bereich beschrieben ist, so sollte dennoch klar sein, dass das hier beschriebene Konzept, wie beansprucht, ebenfalls nützlich im Rahmen von anderen Anwendungen ist, welche außerhalb der explizit aufgeführten Beispiele liegen und andere Anwendungen betreffen, die nicht explizit genannt sind. Beispielsweise könnte das vorgestellte Konzept der Erfindung ebenso Anwendung finden für die Verwendung eines Wärmetauschers als Abgaswärmetauscher, insbesondere Abgaskühler, z.B. zur Abgaskühlung in einem Abgasrückführsystem einer Brennkraftmaschine eines Kraftfahrzeugs oder als Zuheizer zur Innenraumerwärmung eines Kraftfahrzeugs. Weiter ist auch eine Verwendung als Ölkühler, insbesondere zur Kühlung von Motoröl und/oder Getriebeöl oder eine Verwendung als Kältemittelkühler oder Kältemittelkondensator in einem Kältemittelkreislauf einer Klimaanlage eines Kraftfahrzeugs möglich. In diesem Zusammenhang führt die Erfindung auch auf ein Abgasrückführsystem für eine Brennkraftmaschine, aufweisend eine Abgasrückführung, einen Kompressor und einen Wärmetauscher in Form eines Abgaswärmetauschers, insbesondere Kühlers, gemäß dem Konzept der Erfindung. Weiter führt die Erfindung auch auf ein Ladeluftzuführsystem für eine Brennkraftmaschine, aufweisend eine Ladeluftansaugung, einen Luftfilter, einen Kompressor und einen Wärmetauscher gemäß dem Konzept der Erfindung in Form eines Ladeluftwärmetauschers, insbesondere Kühlers, hin.

Vorteilhaft ist, dass sich eine Bodendicke radial nach außen über eine Sicke hinweg verringert, vorzugsweise in einem Verhältnis größter Bodendicke zu geringster Bodendicke im Bereich zwischen 1,5:1 und 4:1, insbesondere zwischen 2:1 und 4:1.

Vorteilhaft ist, dass eine Bodendicke wenigstens an einem Sickengrund geringer als an einer entlang eines Radius weiter innenliegenden Stelle des Bodens ist.

Vorteilhaft ist, dass der Boden am Gehäuse festgelegt ist und/oder der Boden die Strömungskanäle in der einen oder den mehreren Durchgangsöffnungen aufnimmt.

Vorteilhaft ist, dass das Gehäuse sich entlang einer Strömungsrichtung erstreckende Seitenwände aufweist und mehrteilig gebildet ist, wobei wenigstens ein Gehäuseteil eine Gehäusekante ausbildet.

Vorteilhaft ist, dass wenigstens ein Gehäuseteil wenigstens bereichsweise eine erste und eine zweite winklig zueinander ausgerichtete Seitenwand einstückig ausbildet.

Vorteilhaft ist, dass wenigstens ein Gehäuseteil U-förmig gebildet ist, vorzugsweise das Gehäuse aus zwei, insbesondere gegenstückig gebildeten, U-förmigen Gehäuseteilen gebildet ist.

Vorteilhaft ist, dass eine Trennkante von Gehäuseteilen im Bereich einer Seitenwand angeordnet ist.

Vorteilhaft ist, dass wenigstens ein Gehäuseteil L-förmig gebildet ist, vorzugsweise das Gehäuse aus zwei, insbesondere gegenstückig gebildeten, L-förmigen Gehäuseteilen gebildet ist.

Vorteilhaft ist, dass eine Trennkante von Gehäuseteilen im Bereich einer Gehäusekante angeordnet ist.

Vorteilhaft ist, dass der Block eine erste Anordnung und eine zweite Anordnung von Strömungskanälen aufweist, wobei die erste Anordnung und die zweite Anordnung auf gegenüberliegenden Seiten eines Zwischenbodens angeordnet sind.

Vorteilhaft ist, dass ein Zwischenboden parallel zu und/oder im Wesentlichen in einer durch die Trennkanten von Gehäuseteilen aufgespannten Ebene angeordnet ist.

Vorteilhaft ist, dass gegenüberliegende Trennkanten von Gehäuseteilen einen Spalt bilden.

Vorteilhaft ist, dass ein Zwischenboden in einen durch gegenüberliegende Trennkanten der Gehäuseteile gebildeten Spalt eingreift.

Vorteilhaft ist, dass ein Steg Trennkanten von Gehäuseteilen abdeckt und insbesondere außenseitig am Gehäuse angeordnet ist.

Vorteilhaft ist, dass ein Steg eine Sicke aufweist, insbesondere eine Versteifungssicke.

Vorteilhaft ist, dass eine Sicke eines Stegs in einen durch gegenüberliegende Trennkanten von Gehäuseteilen gebildeten Spalt eingreift.

Vorteilhaft ist, dass Gehäuseteile stoffschlüssig und/oder mechanisch aneinander gefügt sind.

Vorteilhaft ist ein Wärmetauscher in Form eines Ladeluft-Wärmetauschers, insbesondere -Kühlers.

Vorteilhaft ist ein Wärmetauscher in Form eines Abgas-Wärmetauschers, insbesondere -Kühlers.

Vorteilhaft ist, dass zumindest zwei Bauteile des Wärmetauschers miteinander verlötet sind.

Vorteilhaft ist, dass alle Bauteile des Wärmetauschers bis auf den zumindest einen Kastendeckel, insbesondere die zwei Kastendeckel, miteinander verlötet sind.

Vorteilhaft ist die Verwendung eines Wärmetauschers als Ladeluftkühler zur direkten oder indirekten Kühlung von Ladeluft in einem Ladeluftsystem für eine Brennkraftmaschine eines Kraftfahrzeugs.

Ausführungsbeispiele werden nun nachfolgend anhand der Zeichnung beschrieben. Diese soll die Ausführungsbeispiele nicht maßstäblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen.

Dabei ist zu berücksichtigen, dass vielfältige Modifikationen und Änderungen betreffend Form und Details einer Ausführungsform vorgenommen werden können, ohne von der allgemeinen Idee der Erfindung abzuweichen. Die in der vorstehenden Beschreibung, in der Zeichnung sowie in den Ansprüchen offenbarten Merkmale der Erfindung können sowohl einzeln als auch in Kombination für die Weiterbildung der Erfindung wesentlich sein. Die allgemeine Idee der Erfindung ist nicht beschränkt auf die exakte Form oder das

Detail der im Folgenden gezeigten beschriebenen Ausführungsformen oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Die Zeichnung zeigt im Detail unterschiedliche Ausführungsformen gemäß dem Konzept der Erfindung, wobei sich eine Realisierung des Blocks des Wärmetauschers im Detail als vorteilhaft erwiesen hat, wie sie in der oben genannten deutschen Patentanmeldung der Anmelderin beschrieben ist. Im Einzelnen zeigt die Zeichnung in:
- Fig. 1:: eine besonders bevorzugte Ausgestaltung eines nicht erfindungsgemäßen Wärmetauschers gemäß einer ersten Variante;
- Fig. 2:: eine vergrößerte perspektivische Teilschnittdarstellung des Bodenbereichs der Ausgestaltung von Fig. 1;
- Fig. 3:: eine Explosionsdarstellung der Fig. 2;
- Fig. 4:: eine Schnittdarstellung des Details einer Schraubverbindung bei der Ausgestaltung gemäß Fig. 1 bis Fig. 3;
- Fig. 5:: eine besonders bevorzugte Ausführungsform gemäß der zweiten nicht erfindungsgemäßen Variante;
- Fig. 6:: eine vergrößerte perspektivische Teilschnittdarstellung der Ausgestaltung von Fig. 5;
- Fig. 7:: eine Explosionsdarstellung von Fig. 6;
- Fig. 8:: eine perspektivische Teilschnittdarstellung des Details einer Wellschlitzbördelung bei Fig. 6;
- Fig. 9, Fig. 10:: eine Schnittdarstellung des Details der Wellschlitzbördelung der Ausgestaltung in Fig. 5 bis Fig. 8;
- Fig. 11: eine perspektivische Darstellung einer Ausgestaltung, bei der das Gehäuse in einer ersten Abwandlung aus zwei U-förmigen Gehäuseteilen gebildet ist und mit einem in Explosionsdarstellung gezeigten Steg mit einer Versteifungssicke verstärkt ist;
- Fig. 12: eine perspektivische Darstellung des Wärmetauschers von Fig. 11;
- Fig. 13: eine perspektivische Darstellung einer weiteren Ausgestaltung eines Wärmetauschers ähnlich dem gem. Fig. 11 und Fig. 12, wobei im Unterschied ein Zwischenboden in einen durch gegenüberliegende Trennkanten von U-förmigen Gehäuseteilen gebildeten Spalt eingreift;
- Fig. 14: eine Explosionsdarstellung des in Fig. 13 gezeigten Wärmetauschers;
- Fig. 15: eine perspektivische Darstellung noch einer weiteren Ausgestaltung eines Wärmetauschers, bei der das Gehäuse in einer zweiten Abwandlung mit L-förmig gebildeten Gehäuseteilen und einer abgewinkelten Trennkante gebildet ist;
- Fig. 16: eine Explosionsdarstellung des Gehäuses des in Fig. 15 gezeigten Wärmetauschers;
- Fig. 17a: eine erste perspektivische Darstellung einer weiteren Ausgestaltung eines Wärmetauschers;
- Fig. 17b: eine zweite perspektivische Darstellung des Wärmetauschers;
- Fig. 18: eine perspektivische Darstellung des Wärmetauscherblocks der weiteren Ausgestaltung; und
- Fig. 19: eine Schnittdarstellung eines Rohrbodenausschnittes.

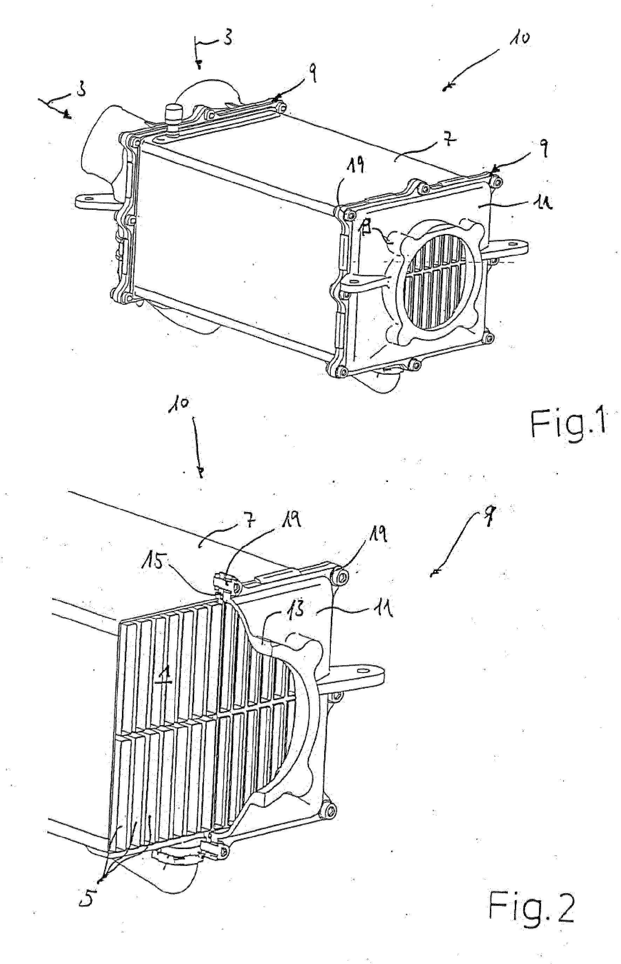

Fig. 1 zeigt einen Wärmetauscher 10 in Form eines Ladeluftkühlers für eine indirekte Ladeluftkühlung, der in einem Ladeluftsystem für eine Brennkraftmaschine eingesetzt werden kann. Ein nicht weiteres dargestelltes Ladeluftsystem weist außerdem eine Ladeluftansaugung, einen Luftfilter und einen Kompressor auf. Der Wärmetauscher 10 stellt eine nicht erfindungsgemäße Ausgestaltung dar, gemäß der ein Kastendeckel 11 an einem Boden 15 über mehrere Schraubverbindungen 19 festgelegt ist.

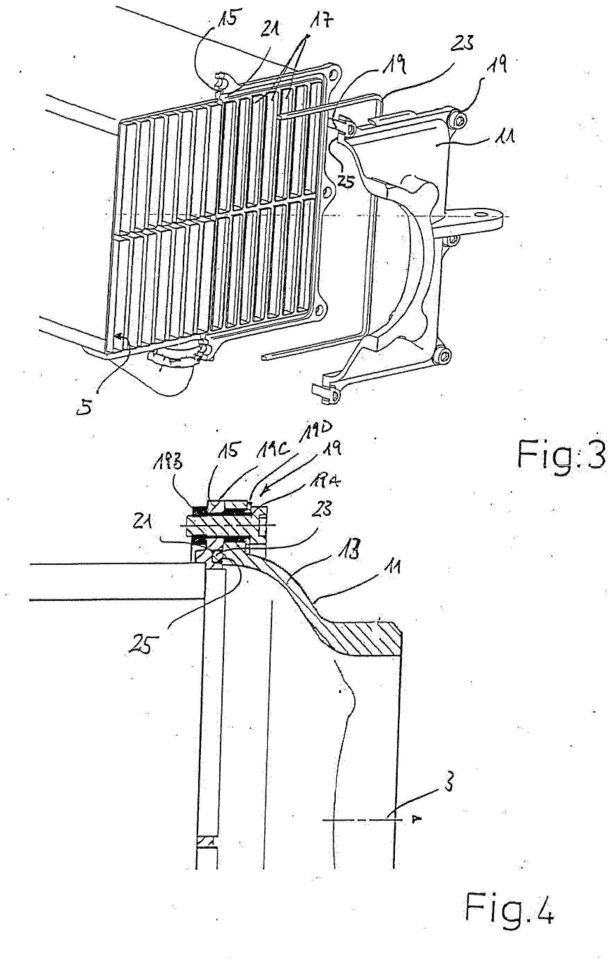

Wie aus einer Zusammenschau von Fig. 1 und Fig. 2 ersichtlich ist, weist der Wärmetauscher 10 einen Block 1 auf, der zur voneinander getrennten und wärmetauschenden Führung eines ersten Fluids in Form einer Ladeluft 3 als auch eines nicht näher dargestellten Kühlmittels vorgesehen ist. Dazu weist der Block 1 eine Anzahl von von der Ladeluft 3 durchströmbaren Strömungskanälen 5 auf sowie ein die Strömungskanäle 5 aufnehmendes und vom Kühlmittel durchströmbares Gehäuse 7. Vorliegend weist der Ladeluftkühler 10 zwei Kästen 9, 9' auf, von denen der vordere Kasten 9 in Fig. 2 bis Fig. 4 näher dargestellt ist. Beide Kästen 9, 9' sind mit den Strömungskanälen 5 strömungsverbunden und weisen einen entsprechend den Anschlüssen für die Ladeluft 3 im Einzelnen unterschiedlich ausgestalteten Kastendeckel 11, 11' auf. Bei dieser Ausführungsform sind beide Kastendeckel 11, 11' aus Kunststoff gebildet, wobei der vordere Deckel 11 mit einer einzigen einstückig angeformten Diffusoranordnung 13 für den Ladeluftanschluss näher dargestellt ist. Am Deckel 11 ist ein Boden 15 festgelegt, welcher in Fig. 3 deutlich dargestellte Durchgangsöffnungen 17 und diesen Durchgangsöffnungen 17 zugeordnete Strömungskanäle 5 aufweist.

In einer abgewandelten Ausgestaltung kann der Wärmetauscher auch als Abgaswärmetauscher ausgebildet sein, der entsprechend, statt von Ladeluft 3, von Abgas durchströmbar ist.

Bei der in Fig. 1 bis Fig. 4 dargestellten Ausgestaltung ist der Kastendeckel 11, 11' mit mehreren in Fig. 4 näher dargestellten Schraubverbindungen 19 am Boden 15 festgelegt. Dabei weist der Boden 15 eine vorliegend vollständig entlang des Bodens 15 umlaufende Sicke 21 auf, in der eine Dichtung 23, vorliegend in Form einer Ringdichtung, aufgenommen ist.

Wie in Fig. 4 in Zusammenschau mit Fig. 1 bis Fig. 3 zu erkennen ist, erstreckt sich die Stirnseite 25 des Kastendeckels 11, 11' entlang der Sicke 21 und stößt dabei stumpf auf den Boden 15, wobei die Stirnseite 25 die Sicke 21 übergreift. Dadurch wird die Dichtung 23 durch die Stirnseite 25 in die Sicke 21 gedrückt, so dass eine sehr effektive Abdichtung zwischen dem Boden 15 und dem Kastendeckel 11 erreicht wird. Die Schraubverbindungen 19 werden vorliegend jeweils durch eine Schraube 19A und einer in einem Schraubauge 19C gehaltenen Setzmutter 19B gebildet. Wie in Fig. 1 bis Fig. 3 deutlich gezeigt ist, ist jeweils ein Schraubauge 19C an jeweils einer Ecke bzw. einer Seitenmitte des Bodens 15 angeordnet. Die Schraubverbindung ist des Weiteren durch einen Ringflansch 19D zwischen Setzmutter 19B und Schraube 19A gesichert. Durch die Schraubverbindung 19 wird ein Pressdruck zwischen Kastendeckel 11 und dem Boden 15 auf die Dichtung 23 ausgeübt, welche sich aufgrund des Pressdrucks in der Sicke 21 ausdehnt und Anlageflächen zwischen Kastendeckel 11 und Boden 15 wirksam abdichtet.

Die Schraubaugen 19C sind zueinander gleichmäßig beabstandet - vorliegend sollte der Abstand ca. 50 bis 80 mm betragen. Zum Anschrauben sind entweder auf der dem Block 1 zugewandten Bodenseite oder am Kasten 9, 9' Setzmuttern 19B angeordnet. Vorliegend wird die Schraube 19A durch einen Kastenfuß in Form einer Metallbuchse am Boden 1 eingesteckt und mit der Mutter 19B hinter dem Boden 1 verschraubt.

Bei der Schraubverbindung l19 liegt die Nutbreite im Boden 1 bei ca. 3 mm. Die 2 mm breite Dichtung 23 wird in die Sicke 21 gedrückt. Die Sicke 21, 21' ist an einigen Stellen lokal, vorliegend alle 30 mm, auf das Sickenmaß aufgedickt, damit die Dichtung 23 positioniert ist.

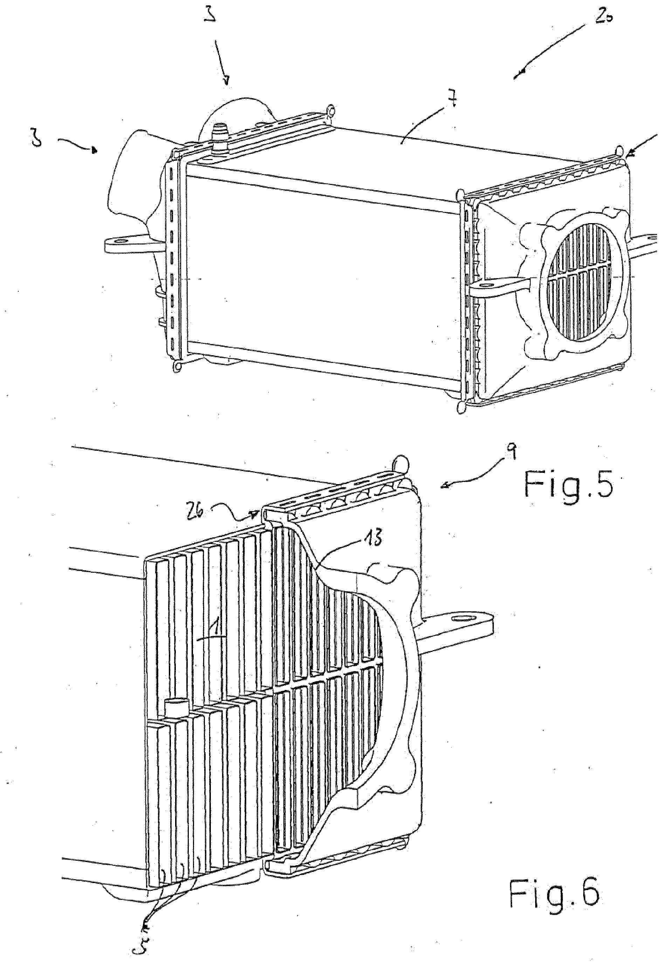

Fig. 5 zeigt einen anderen Ladeluftkühler 20, ebenfalls für eine oben in Bezug auf den Ladeluftkühler 10 näher beschriebene indirekte Ladeluftkühlung, bei dem vorliegend gemäß einer nicht erfindungsgemäßen zweiten Ausgestaltung der Kastendeckel 11 am Boden 15 über eine Schlitzbördelung 26 als Wellschlitzbördelung festgelegt ist. Gleiche Bezugszeichen wurden für einander entsprechende Teile der Ladeluftkühler 10 und 20 verwendet.

Im Unterschied zu der in Bezug auf Fig. 1 bis Fig. 4 beschriebenen Ausgestaltung, ist bei der hier gezeigten Ausgestaltung eines Ladeluftkühlers 20 der Kastendeckel 11' am Boden 15' über eine Wellschlitzbördelung 26 festgelegt. Dazu ist in der bei der vorliegenden Wellschlitzbördelung 26 gebildeten Sicke 21' eine Dichtung 23' eingelegt, welche nach Aufsetzen des Kastendeckels 11' durch die in die Sicke 21' eingreifende Stirnseite 25' des Kastendeckels 11' abdichtend in die Sicke 21' gedrückt wird. Dadurch wird eine besonders vorteilhafte Abdichtung des Kastens 9, 9' erreicht. Der die Stirnseite 25' des Kastendeckels 11' bildende Wandabschnitt 28 des Kastendeckels 11' geht einends in den zuvor beschriebenen als Diffusor 13 ausgebildeten Luftanschluss über und anderenends weist der Wandabschnitt 28 entlang einer Höhe H der Sicke 21' halbzylindrisch ausgeformte Rippen 27 auf, die auf Abstand 29 gesetzt sind. Den Rippen 27 gegenüberliegend ist jeweils ein Langloch 31 einer dem Wandabschnitt 28 gegenüberliegenden Flanke 33 angeordnet. Dem Abstand 29 gegenüberliegend ist das zwischen den Langlöchern 31 liegende Material 35 der Flanke 33, vorliegend Aluminium, angeordnet. Dieses Material 35 kann beim Schließen der Schlitzbördelung 26 zur Bildung der Wellschlitzbördelung in den Abstand 29 zwischen die Rippen 27 gedrückt werden. Zumindest einige der Bauteile des Wärmetauschers 10 sind miteinander verlötet, insbesondere Nocolok gelötet. In einem anderen Ausführungsbeispiel sind alle Bauteile des Wärmetauschers 10 bis auf den zumindest einen Kastendeckel, insbesondere die Kastendeckel, miteinander verlötet, beispielsweise Nocolok gelötet.

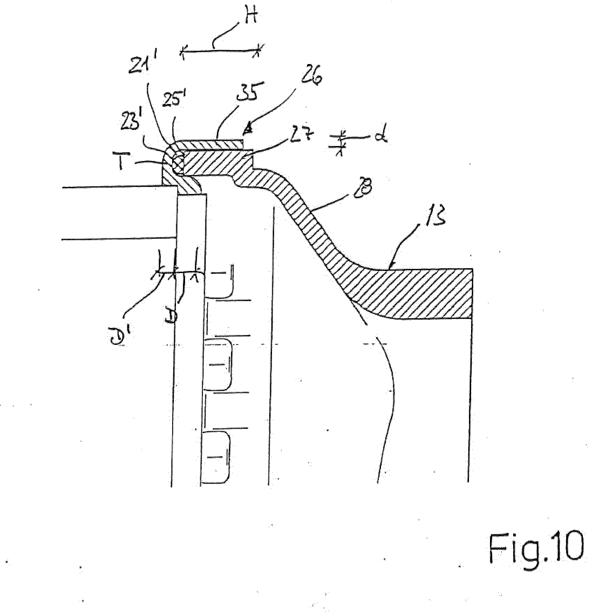

Bei der in Fig. 10 ausgeführten Darstellung ist - gleichermaßen anwendbar ein einem Wärmetauscher 10 und einem Wärmetauscher 20 - darüber hinaus dargestellt, dass sich eine Bodendicke radial nach außen über die Sicke 21' hinweg verringert - vorliegend vom größten Wert D im Bereich der Öffnungen 17 für die Strömungskanäle 5, vorliegend Rohre, über einen Wert D' im Bereich der Sicke 21', bis hin zu einem kleinsten Wert d im Bereich der außenliegenden Flanke 33 der Sicke 21', dessen Material 35 zur Bildung der Wellschlitzbördelung 26 umgebördelt wird. Vorliegend ändert sich die Dicke des Bodens 15' von D = 4 mm auf d = 1,5 mm, insbesondere von D=3 mm auf d=2mm, d.h. insgesamt ist es bei Ausführungsformen dieser Art möglich, das Bodenmaterial um 30 bis 70%, insbesondere um 50 bis 70 % zu reduzieren. Es hat sich darüber hinaus gezeigt, dass es dazu auch möglich ist, die Dicke im Tiefpunkt T der Sicke 21' bereits im Bereich des kleinsten Wertes d auszubilden. Ansonsten ist es unabhängig von der hier beschriebenen Ausgestaltung möglich, den Übergang von der starken Dicke D auf die dünne Dicke d beliebig auszuführen.

Die beschriebene Ausbildung der Sicke 21' hat den Vorteil, dass der Boden 15' bei einem guten Kassettierprozess im Bereich der Öffnungen 17 mit der starken Dicke D eine gute Rohr- bzw. Strömungskanalverlötung erlaubt. Dagegen wird aufgrund des kleinsten Wertes d der geringen Materialstärke im Bereich der Wellschlitzbördelung 26 ein besonders bauraumsparendes und Verschließkräfte geringhaltendes Konzept erreicht. Beispielsweise kann das zu bördelnde Material 35 im Rahmen eines Stanzprozesses weggedrückt werden. Durch die Materialreduzierung im Bereich der Flanke 33 kann die Befestigung des Kastens 9, 9' mit deutlich weniger Bauraumbedarf ausgeführt werden. Zumindest einige der Bauteile des Wärmetauschers 10 sind miteinander verlötet, insbesondere Nocolok gelötet. In einem anderen Ausführungsbeispiel sind alle Bauteile des Wärmetauschers 10 bis auf den zumindest einen Kastendeckel, insbesondere die Kastendeckel, miteinander verlötet beispielsweise Nocolok gelötet.

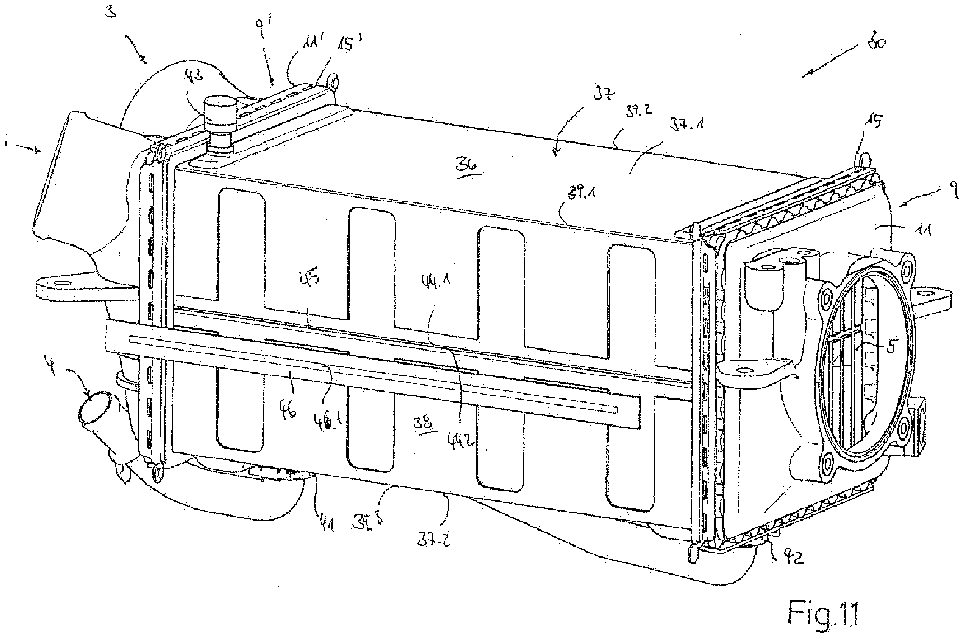

Die anhand der Fig. 11 bis Fig. 16 erläuterten Ausgestaltung eines Wärmetauschers in Form eines Ladeluftkühlers 30, 40, 50 zeigen vorteilhafte Beispiele einer Ausführung eines Gehäuses 7, wie es in den vorher beschriebenen Fig. 1 bis Fig. 10 allgemein gezeigt ist. Die in Fig. 11 bis Fig. 16 gezeigten Abwandlungen eines Gehäuses 37, 47, 57 können nach Bedarf für ein Gehäuse 7 der Fig. 1 bis Fig. 10 eingesetzt werden. Die in Fig. 11 bis Fig. 16 beschriebenen Ausgestaltungen eines Wärmetauschers 30, 40, 50 sind lediglich beispielhaft als Ausgestaltungen gemäß einer zweiten Variante dargestellt, bei der ein Kastendeckel des Wärmetauschers 30, 40, 50 am Boden als Stützbördelung festgelegt ist. Die in Bezug auf Fig. 11 bis Fig. 16 gemachten Angaben lassen sich gleichermaßen auf eine nicht gezeigte Ausführungsform eines Wärmetauschers anwenden, bei welcher der Kastendeckel durch eine Schraubverbindung am Boden festgelegt ist. Insgesamt lassen sich die in Fig. 1 bis Fig. 10, insbesondere betreffend die Festlegung des Kastendeckels, am Boden offenbarten Merkmale in beliebiger Weise sowohl einzeln als auch in Kombination mit den in Fig. 11 bis Fig. 16 offenbarten Merkmalen, insbesondere betreffend die Ausbildung eines Gehäuses 37, 47, 57, einzeln oder in Kombination kombinieren und je nach Verwendungszweck einsetzen. Insofern wurden für gleiche Teile oder Teile gleicher Funktion in den Ausgestaltungen gleiche Bezugszeichen verwendet. Zumindest einige der Bauteile des Wärmetauschers sind miteinander verlötet, insbesondere Nocolok gelötet. In einer anderen Ausgestaltung sind alle Bauteile des Wärmetauschers bis auf den zumindest einen Kastendeckel, insbesondere die Kastendeckel, miteinander verlötet beispielsweise Nocolok gelötet.

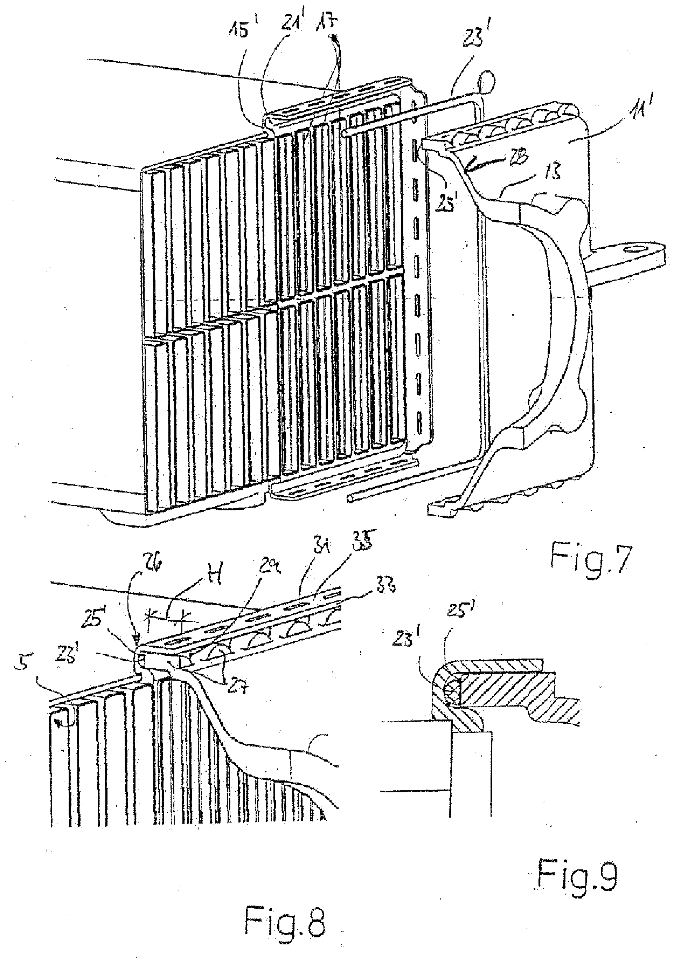

Fig. 11 zeigt einen Wärmetauscher 30 in Form eines Ladeluftkühlers als Ausgestaltung gemäß einer zweiten Variante ähnlich dem in Fig. 5 beschriebenen Wärmetauscher 20. Dieser weist wiederum einen Block 1 mit einer Anzahl von Ladeluft 3 durchströmbaren Strömungskanälen 5 auf, welche in einem vom Kühlmittel durchströmbaren Gehäuse 37 aufgenommen sind. Wie anhand von Fig. 5 bis Fig. 10 erläutert, sind Kästen 9, 9' mit den Strömungskanälen 5 strömungsverbunden und weisen einen entsprechend den Anschlüssen für die Ladeluft 3 im Einzelnen unterschiedlich ausgestalteten Kastendeckel 11, 11' auf. Diese sind jeweils am Boden 15, 15' entsprechend der bezüglich Fig. 5 bis Fig. 10 erläuterten Weise festgelegt. Der Boden 15, 15' ist am Gehäuse festgelegt, wobei die Strömungskanäle 5 die in Fig. 7 näher dargestellten Durchgangsöffnungen 17 durchsetzen.

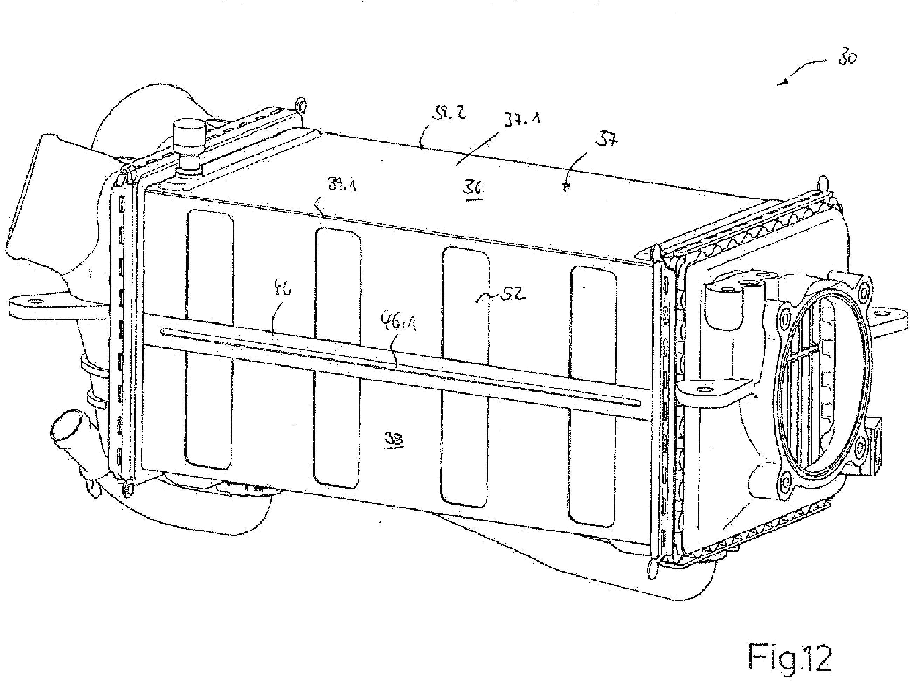

Das in Fig. 12 perspektivisch und in Fig. 11 als Explosionsdarstellung dargestellte Gehäuse 37 hat zwei Deckwände 36 und zwei Seitenwände 38, wobei eine Deckwand 36 im Wesentlichen rechtwinklig zur Seitenwand 38 ausgerichtet ist. Ein vorliegend U-förmig gebildetes oberes Gehäuseteil 37.1 bildet eine erste und zweite obere Gehäusekante 39.1, 39.2, während ein zweites unteres Gehäuseteil 37.2 eine erste untere Gehäusekante 39.3 und eine nicht dargestellte zweite untere Gehäusekante 39.4 bildet. Das obere Gehäuseteil 37.1 ist gegenstückig zum unteren Gehäuseteil 37.2 - bis auf Kühlmittelanschlüsse 41, 42, 43 - im Wesentlichen gleich ausgeführt. Über die Kühlmittelanschlüsse 41, 42, 43 wird Kühlmittel 4 in nicht näher dargestellter Weise dem Inneren des Gehäuses 37 zur Umspülung der Strömungskanäle 5 zu- und abgeführt. Vorliegend ist der gesamte Gehäusemantel des Gehäuses 37 mittels dem oberen Gehäuseteil 37.1 und dem unteren Gehäuseteil 37.2 gebildet. Die Trennkanten 44.1 bzw. 44.2 des oberen Gehäuseteils 37.1 bzw. des unteren Gehäuseteils 37.2 sind vorliegend im Bereich einer Seitenwand 38 des Gehäuses 37 angeordnet und stehen sich zur Ausbildung eines Spalts 45 gegenüber. Zum dichten Verschließen des Gehäuses 37 ist der Spalt 45 mit einem Steg 46 abgedeckt, wobei eine Versteifungssicke 46.1 des Stegs in den Spalt 45 eingreift. Neben einem dichten Verschließen des Gehäuses 37 führt die Anbringung des Stegs 46 dazu, dass die bereits durch einteilige Ausführung des oberen Gehäuseteils 37.1 und des unteren Gehäuseteils 37.2 vergleichsweise hohe Stabilität des Gehäuses 37 noch weiter verbessert wird. Zumindest einige der Bauteile des Wärmetauschers sind miteinander verlötet, insbesondere Nocolok gelötet. In einer anderen Ausgestaltung sind alle Bauteile des Wärmetauschers bis auf den zumindest einen Kastendeckel, insbesondere die Kastendeckel, miteinander verlötet beispielsweise Nocolok gelötet.

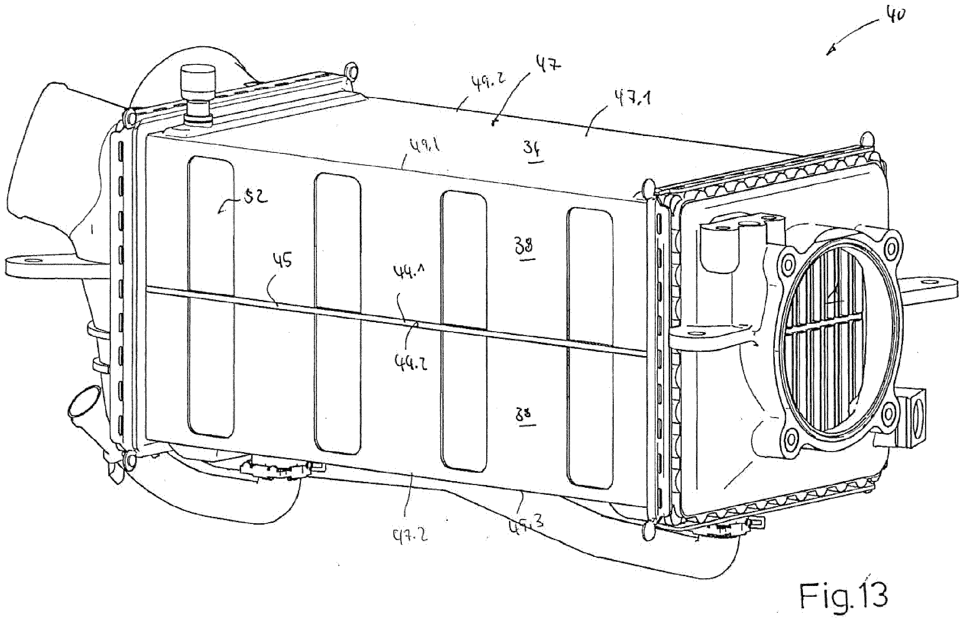

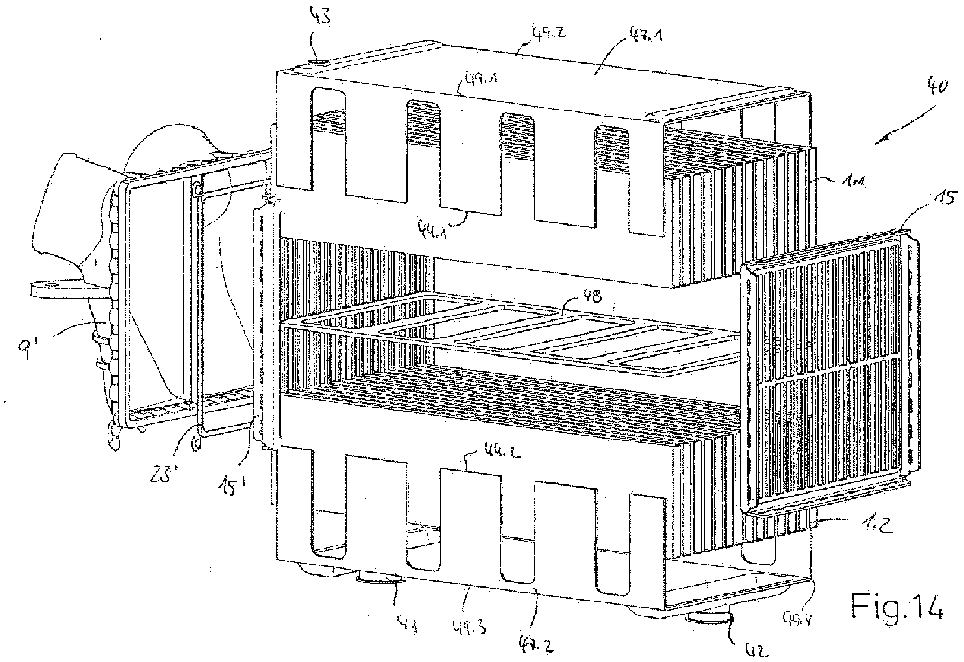

Fig. 13 zeigt in perspektivischer Darstellung und Fig. 14 in einer Explosionsdarstellung eine weitere Ausgestaltung eines Wärmetauschers 40 in Form eines Ladeluftkühlers, dessen Gehäuse 47 wiederum aus einem oberen Gehäuseteil 47.1 und einem unteren Gehäuseteil 47.2 gebildet ist, wobei die Gehäuseteile 47.1 und 47.2 praktisch identisch zu den Gehäuseteilen 37.1 und 37.2 der Fig. 11 - U-förmig gebildet sind. Die sich gegenüberliegenden Trennkanten 44.1, 44.2 der Gehäuseteile 47.1, 47.2 bilden wiederum einen Spalt 45, in den ein in Fig. 14 näher dargestellter Zwischenboden 48 eingreift. Der Block 1 weist vorliegend eine erste Anordnung 1.1 und eine zweite Anordnung 1.2 von Strömungskanälen 5 auf, wobei die erste Anordnung 1.1 und die zweite Anordnung 1.2 auf gegenüberliegenden Seiten des Zwischenbodens 48 angeordnet sind. Zumindest einige der Bauteile des Wärmetauschers sind miteinander verlötet, insbesondere Nocolok gelötet. In einer anderen Ausgestaltung sind alle Bauteile des Wärmetauschers bis auf den zumindest einen Kastendeckel, insbesondere die Kastendeckel, miteinander verlötet beispielsweise Nocolok gelötet.

Aus den Darstellungen in Fig. 11 bis Fig. 14 ist ersichtlich, dass sich ein Wärmetauscher 30, 40 mit den U-förmig gebildeten Gehäuseteilen 37.1, 37.2, 47.1, 47.2 besonders einfach kassettieren lässt, wobei gemäß der in Fig. 11 und Fig. 12 dargestellten Ausgestaltung ein Steg 46 zur Abdichtung des Spalts 45 zwischen den Trennkanten 44.1 und 44.2 genutzt wird, während gemäß der in Fig. 13 und Fig. 14 dargestellten Ausgestaltung ein Zwischenboden 48 zur Abdichtung des Spalts 45 genutzt wird. Die Gehäuseteile 37.1, 37.2 bzw. 47.1, 47.2 werden vorliegend aufeinander gelötet - alternativ oder zusätzlich können die Gehäuseteile auch aufeinandergeschweißt werden. In einer nicht dargestellten Weise können die Gehäuseteile auch zusätzlich oder alternativ mechanisch aneinandergefügt sein.

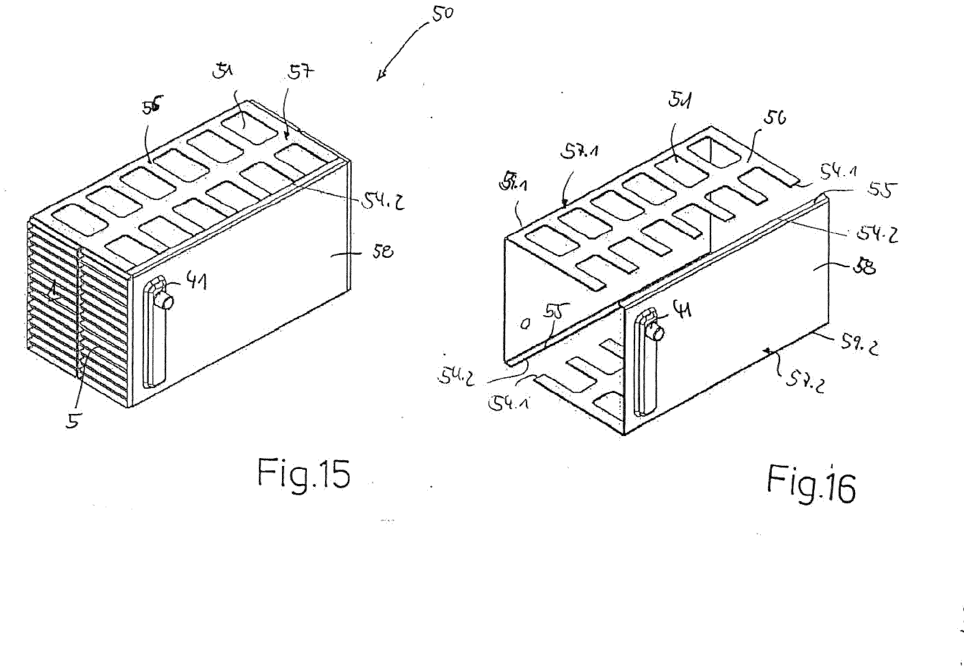

Fig. 15 zeigt eine weitere Ausgestaltung eines Wärmetauschers 50, bei dem ein Gehäuse 57 in der in Fig. 16 dargestellten Weise mit einem oberen L-förmigen Gehäuseteil 57.1 und einem unteren L-förmigen Gehäuseteil 57.2 gebildet ist. Wiederum bildet jedes L-förmige Gehäuseteil 57.1, 57.2 eine Gehäusekante 59.1 bzw. 59.2 aus, sowie jeweils eine Deckwand 56 und Seitenwand 58 des Gehäuses 57. Bei der in Fig. 15 und Fig. 16 gezeigten Ausführungsform ist eine Deckwand 56 jeweils mit Versteifungsfeldern und/oder Öffnungen 51 versehen, während bei den in Fig. 11 bis Fig. 14 dargestellten Ausgestaltung Versteifungsfelder 52 und/oder Öffnungen auf einer Seitenwand 38 angebracht sind. Zumindest einige der Bauteile des Wärmetauschers sind miteinander verlötet, insbesondere Nocolok gelötet. In einer anderen Ausgestaltung sind alle Bauteile des Wärmetauschers bis auf den zumindest einen Kastendeckel, insbesondere die Kastendeckel, miteinander verlötet beispielsweise Nocolok gelötet.

Wie aus Fig. 16 ersichtlich, ist das erste Gehäuseteil 57.1 und das zweite Gehäuseteil 57.2 wiederum gegenstückig ausgebildet, so dass durch Assemblierung derselben an einer Trennkante 54.1, 54.2 der gesamte Gehäusemantel des Gehäuses 57 fertiggestellt ist. Vorliegend sind jeweils diagonal gegenüberliegende Trennkanten 54.2 mit einer umgebogenen Lasche 55 versehen, welche - außer zur Versteifung des L-förmigen Gehäuseteils 57.1, 57.2 - auch der besseren formschlüssigen Befestigung der Gehäuseteile 57.1, 57.2 dient. Dazu wird vorteilhaft jeweils eine Trennkante 54.1 unter die Lasche 55 der gegenüberliegenden Trennkante 54.2 geschoben, um den Gehäusemantel des Gehäuses 57 bereitzustellen. Die Gehäuseteile 57.1, 57.2 werden vorliegend aneinander gelötet. Zumindest einige der Bauteile des Wärmetauschers sind miteinander verlötet, insbesondere Nocolok gelötet. In einem anderen Ausführungsbeispiel sind alle Bauteile des Wärmetauschers bis auf den zumindest einen Kastendeckel, insbesondere die Kastendeckel, miteinander verlötet beispielsweise Nocolok gelötet.

Insgesamt ermöglichen die in Fig. 11 bis Fig. 16 dargestellten Ausgestaltungen eines Gehäuses 37, 47, 57 eine Realisierung eines mehrteiligen und dennoch besonders stabilen Gehäuses.

Zusammenfassend wird ein Wärmetauscher 10, 20, 30, 40, 50, insbesondere ein Ladeluftwärmetauscher oder Abgaswärmetauscher, zum Wärmetausch zwischen einem ersten Fluid, insbesondere einer Ladeluft 3 oder einem Abgas, und einem zweiten Fluid, insbesondere einem Kühlmittel, angegeben, welcher aufweist: eine im Block 1 voneinander getrennte und wärmetauschende Führung des ersten und zweiten Fluids, welcher Block 1 eine Anzahl von dem ersten Fluid durchströmbare Strömungskanäle 5 und ein die Strömungskanäle 5 aufnehmendes von dem zweiten Fluid durchströmbares Gehäuse 7, 37, 47, 57 aufweist; mindestens einen Kastendeckel 11, 11', welcher mit den Strömungskanälen 5 strömungsverbunden ist, einen Boden 15, 15', der am Kastendeckel 11, 11' festgelegt ist und mit einer oder mit mehreren Durchgangsöffnungen 17 für Strömungskanäle 5 versehen ist. Um eine vorteilhafte Anbindung des Kastendeckels 11, 11' am Boden 15, 15' zu erreichen, insbesondere für den Fall, dass Kastendeckel 11, 11' und Boden 15, 15' aus unterschiedlichen Materialien bestehen, sieht die Erfindung vor, dass der Kastendeckel 11, 11' am Boden 15, 15' über eine oder mehrere Verbindungen als Wellschlitzbördelung 26 festgelegt ist.

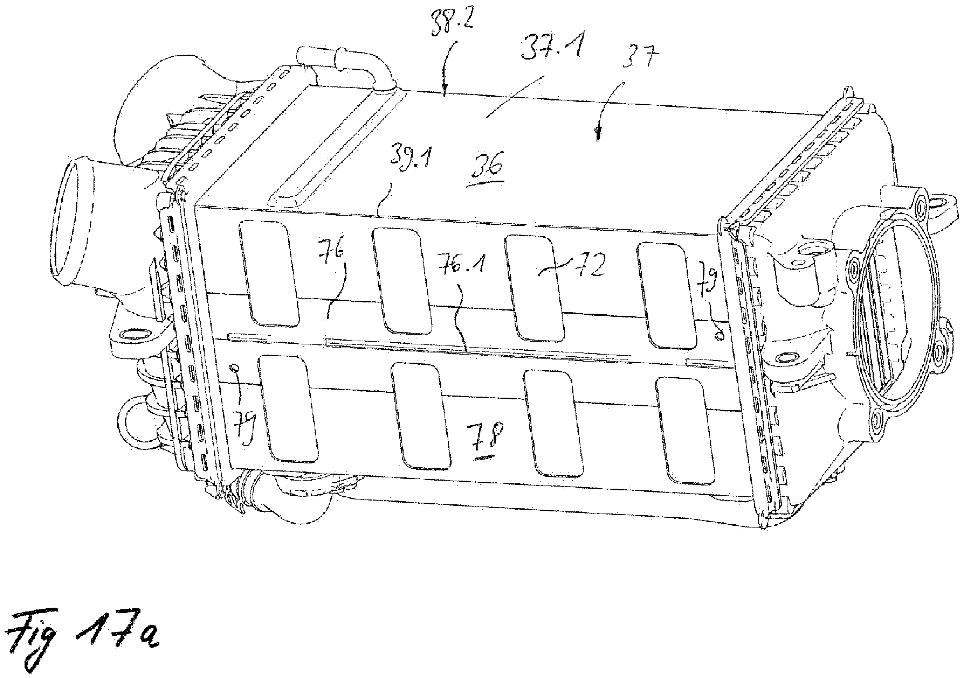

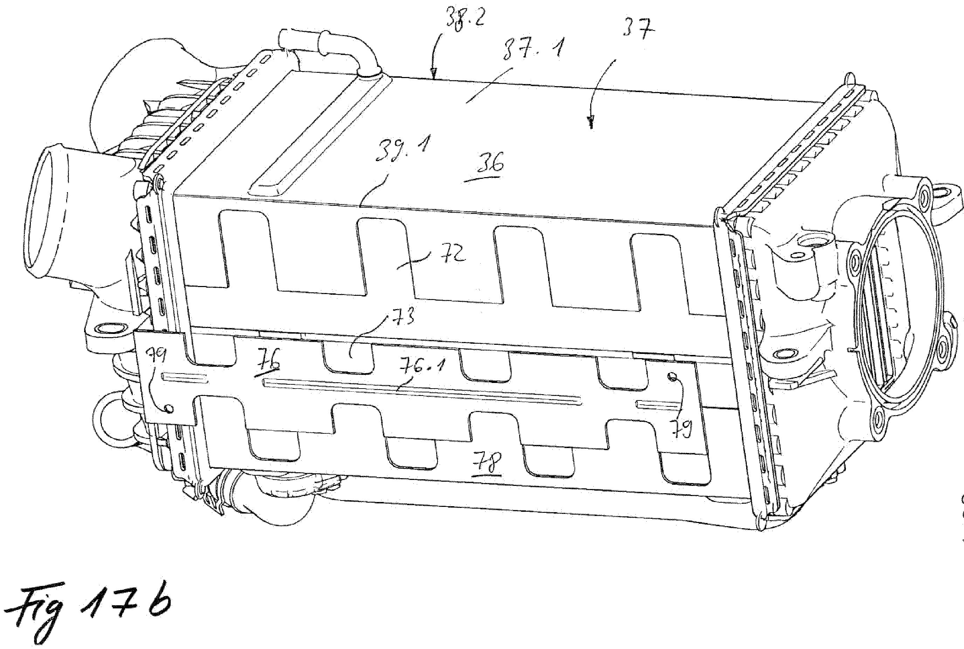

Fig. 17a zeigt eine erste perspektivische Darstellung einer weiteren Ausgestaltung des Wärmetauschers und Fig. 17b zeigt eine zweite perspektivische Darstellung des Wärmetauschers, wobei bei Fig. 17b der Steg 76 in explosiver Darstellung dargestellt ist. Im Vergleich zu den vorherigen Ausgestaltungen ist der Steg 76 breiter ausgebildet und weist Öffnungen 73, insbesondere zungenartige Öffnungen, auf.

Das Gehäuse 37 mit den Deckwänden 36 ist derart ausgebildet, dass die zumindest eine Deckwand 36 Öffnungen 72 aufweist. Die Öffnungen 72 korrespondieren mit den Öffnungen 73. Die Öffnungen 72 sind im Wesentlichen zungenartig ausgebildet. Der Steg 76 weist ebenso eine Versteifungssicke 76.1 auf. Ferner weist der Steg 76 nicht Öffnungen 79 auf.

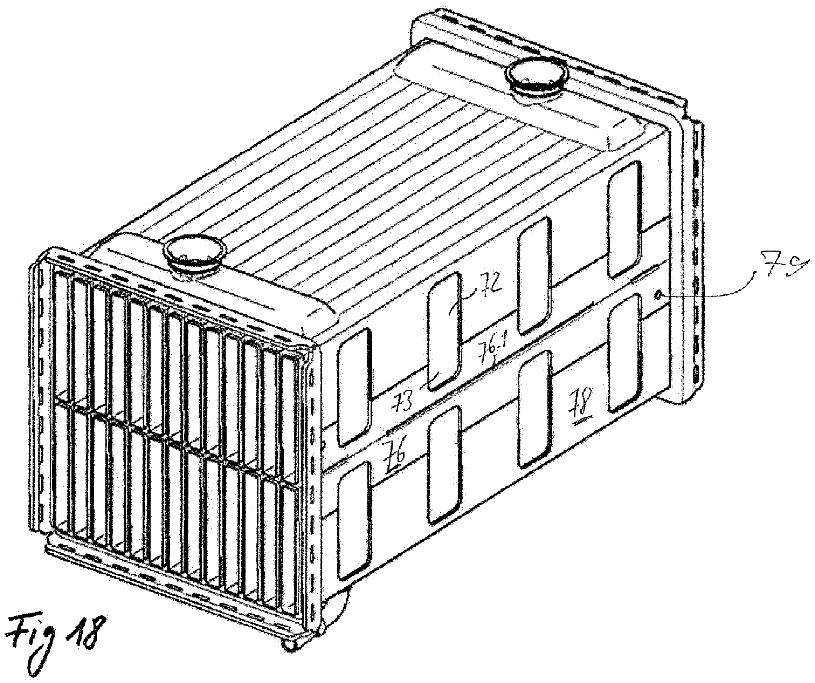

Fig. 18 zeigt eine perspektivische Darstellung des Wärmetauscherblocks der weiteren Ausgestaltung. Die in Fig. 18 dargestellten Merkmale weisen dieselben Bezugszeichen auf wie in den vorherigen Figuren.

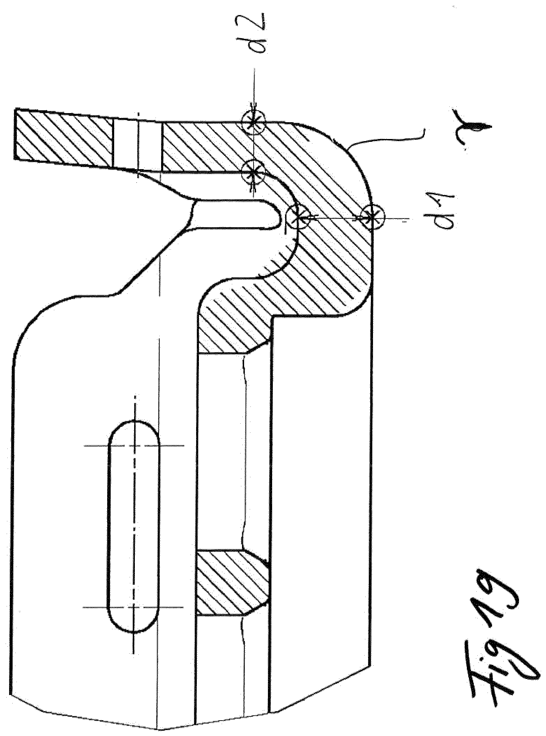

Fig. 19 zeigt eine Schnittdarstellung eines Rohrbodenausschnittes. Der Rohrboden weist eine im Wesentlichen umlaufende Nut auf. Im Bereich des Nutgrundes ist zumindest ein Radius r vorgesehen. Der Radius r nimmt insbesondere Werte von 1 bis 5mm, insbesondere Werte von 2mm bis 3mm an. Im Nutgrund hat der Boden eine Dicke d1. Diese Dicke d1 geht in die Dicke d2 über. Die Dicke d2 ist im Wesentlichen nach dem Radius r angeordnet. Die Dicke d1 weist beispielsweise den Wert 3mm auf. Die Dicke d2 weist beispielsweise den Wert 2mm auf.

## Patentansprüche

1. Ladeluft-Wärmetauscher oder Abgas-Wärmetauscher (10, 20, 30, 40, 50) zum Wärmetausch zwischen einem ersten Fluid, welches Ladeluft (3) oder Abgas (3) ist, und einem zweiten Fluid, welches ein Kühlmittel ist, aufweisend:
- einen Block (1) zur voneinander getrennten und wärmetauschenden Führung des ersten und zweiten Fluids, welcher Block (1) eine Anzahl von dem ersten Fluid durchströmbare Strömungskanäle (5) und ein die Strömungskanäle (5) aufnehmendes, von dem zweiten Fluid durchströmbares Gehäuse (7, 37, 47, 57) aufweist,
- mindestens einen Kastendeckel (11, 11'), welcher mit den Strömungskanälen (5) strömungsverbunden ist,
- einen Boden, der am Kastendeckel (11, 11') festgelegt ist und mit einer oder mit mehreren Durchgangsöffnungen (17) für die Strömungskanäle (5) versehen ist,
wobei der Kastendeckel (11, 11') und der Boden (15, 15') aus unterschiedlichen Materialien bestehen, wobei der Kastendeckel (11, 11') und eine Dichtung (23, 23') Teile eines Kastens (9, 9') sind, zwischen dem Boden (15, 15') und dem Kastendeckel (11, 11') die eine Dichtung (23, 23') festgelegt ist, wobei der Boden (15, 15') eine Sicke (21, 21') aufweist, insbesondere in einem Bodenrandbereich, wobei in der Sicke (21, 21') die eine Dichtung (23, 23') angeordnet ist, und wobei sich eine Stirnseite (25, 25') des Kastendeckels (11, 11') entlang der Sicke (21, 21') erstreckt, **dadurch gekennzeichnet, dass** der Kastendeckel (11, 11') am Boden (15, 15') über eine oder mehrere Verbindungen als Wellschlitzbördelung (26) festgelegt ist, wobei der Kastendeckel (11, 11') mit einer Stirnseite (25, 25') stumpf auf den Boden (15, 15') stößt, wobei die Stirnseite (25, 25') die Sicke (21, 21') übergreift, wobei die Breite der Stirnseite größer ist als die Breite der Sicke.

2. Ladeluft-Wärmetauscher oder Abgas-Wärmetauscher (10, 20, 30, 40, 50) nach Anspruch 1, wobei der Boden (15, 15') aus einem Metall, insbesondere aus Aluminium, besteht.

3. Ladeluft-Wärmetauscher oder Abgas-Wärmetauscher (10, 20, 30, 40, 50) nach einem der Ansprüche 1 oder 2, wobei der Kastendeckel (11, 11') aus einem Nichtmetall, insbesondere aus einem Kunststoff, einem Faserverbundstoff, einer Keramik oder Mischungen daraus besteht.

## Claims

1. A charge air heat exchanger or an exhaust gas heat exchanger (10, 20, 30, 40, 50) for heat exchange between a first fluid which is charge air (3) or exhaust gas (3) and a second fluid which is a coolant, having:
- a block (1) for separated and heat-exchanging guidance of the first and the second fluid, wherein the block (1) has a number of flow channels (5) through which the first fluid can flow and a housing (7, 37, 47, 57) which receives the flow channels (5) and through which the second fluid can flow,
- at least one box lid (11, 11') which is fluidly connected to the flow channels (5),
- a bottom which is fixed to the box lid (11, 11') and provided with one or more through openings (17) for the flow channels (5),
wherein the box lid (11, 11') and the bottom (15, 15') consist of different materials, wherein the box lid (11, 11') and a sealing (23, 23') are parts of a box (9, 9'), wherein the one sealing (23, 23') is fixed between the bottom (15, 15') and the box lid (11, 11'), wherein the bottom (15, 15') has a bead (21, 21'), in particular in a bottom edge region, wherein the one sealing (23, 23') is arranged inside the bead (21, 21'), and wherein an end face (25, 25') of the box lid (11, 11') extends along the bead (21, 21'), **characterised in that** the box lid (11, 11') is fixed to the bottom (15, 15') as a corrugated slot beading (26) via one or more connections, wherein an end face (25, 25') of the box lid (11, 11') bluntly abuts the bottom (15, 15'), wherein the end face (25, 25') engages over the bead (21, 21'), wherein the width of the end face is larger than the width of the bead.

2. The charge air heat exchanger or the exhaust gas heat exchanger (10, 20, 30, 40, 50) according to claim 1, wherein the bottom (15, 15') consists of a metal, in particular of aluminium.

3. The charge air heat exchanger or the exhaust gas heat exchanger (10, 20, 30, 40, 50) according to one of claims 1 or 2, wherein the box lid (11, 11') consists of a non-metal, in particular of a plastic, a fibre composite, a ceramic or mixtures thereof.

## Revendications

1. Echangeur de chaleur d'air de suralimentation ou échangeur de chaleur de gaz d'échappement (10, 20, 30, 40, 50) servant à l'échange de chaleur entre un premier fluide qui est de l'air de suralimentation (3) ou un gaz d'échappement (3), et un second fluide qui est un liquide de refroidissement, ledit échangeur de chaleur présentant :
- un bloc (1) servant au guidage du premier et du second fluide, guidage qui se produit les fluides étant séparés l'un de l'autre et par échange de chaleur, lequel bloc (1) présente un certain nombre de conduits d'écoulement (5) traversés par le premier fluide, et un carter (7, 37, 47, 57) traversé par le second fluide et logeant les conduits d'écoulement (5),
- au moins un couvercle de caisson (11, 11') qui est relié fluidiquement aux conduits d'écoulement (5),
- un fond qui est fixé sur le couvercle de caisson (11, 11') et est doté d'une ou de plusieurs ouvertures de passage (17) pour les conduits d'écoulement (5),
où le couvercle de caisson (11, 11') et le fond (15, 15') se composent de matériaux différents, où le couvercle de caisson (11, 11') et un joint d'étanchéité (23, 23') sont des pièces d'un caisson (9, 9'), l'un des joints d'étanchéité (23, 23') est fixé entre le fond (15, 15') et le couvercle de caisson (11, 11'), où le fond (15, 15') présente une moulure (21, 21'), en particulier dans une zone de bordure du fond, où l'un des joints d'étanchéité (23, 23') est disposé dans la moulure (21, 21'), et où un côté frontal (25, 25') du couvercle de caisson (11, 11') s'étend le long de la moulure (21, 21'), **caractérisé en ce que** le couvercle de caisson (11, 11') est fixé sur le fond (15, 15') par un ou plusieurs points d'assemblage formant un bord rabattu ondulé à fentes (26), où le couvercle de caisson (11, 11'), par un côté frontal (25, 25'), vient bord à bord sur le fond (15, 15'), où le côté frontal (25, 25') chevauche la moulure (21, 21'), où la largeur du côté frontal est supérieure à la largeur de la moulure.

2. Echangeur de chaleur d'air de suralimentation ou échangeur de chaleur de gaz d'échappement (10, 20, 30, 40, 50) selon la revendication 1, où le fond (15, 15') se compose d'un métal, en particulier d'aluminium.

3. Echangeur de chaleur d'air de suralimentation ou échangeur de chaleur de gaz d'échappement (10, 20, 30, 40, 50) selon l'une des revendications 1 ou 2, où le couvercle de caisson (11, 11') se compose d'un matériau non métallique, en particulier d'une matière plastique, d'un matériau composite renforcé par des fibres, d'une céramique ou de mélanges de ces matériaux.
